# EUROPEAN PATENT SPECIFICATION

(11) **EP 0 389 560 B1**
(45) Date of publication and mention of the grant of the patent: **30.08.1995**
(21) Application number: 89900986.4
(22) Date of filing: 30.11.1988
(51) Int. Cl.: A23G 1/22, B29C 33/42, B29C 45/00

(54) **MOLD FOR IMPRINTING MOLDABLE FOOD STUFFS AND METHOD AND APPARATUS FOR MAKING THE MOLD**
GIESSFORM ZUM STANZEN FORMBARER NAHRUNGSMITTEL SOWIE VERFAHREN ZUR HERSTELLUNG DER GIESSFORM
MOULE DESTINES A EMPREINDRE DES PRODUITS ALIMENTAIRES MOULABLES, PROCEDE ET APPAREIL DE FABRICATION DU MOULE

(30) Priority: 30.11.1987 US 126783
(43) Date of publication of application: 03.10.1990
(73) Proprietor: ROBINSON, Jeffrey, Encino, CA 91436 (US)
(72) Inventor: ROBINSON, Jeffrey, Encino, CA 91436 (US)
(74) Representative: Crisp, David Norman
(86) International application number: US8804289
(87) International publication number: WO8905095

(56) References cited:
- DE-A- 1 929 875
- DE-A- 2 017 477
- DE-A- 2 125 547
- DE-A- 2 514 969
- GB-A- 2 104 824
- US-A- 762 460
- US-A- 1 399 817
- US-A- 3 061 880
- US-A- 3 680 828
- US-A- 3 883 109
- US-A- 4 200 658
- US-A- 4 254 933
- US-A- 4 384 702
- US-A- 4 421 773
- US-A- 4 668 521
- US-A- 4 708 314
- PATENT ABSTRACTS OF JAPAN, vol. 10, no. 155 (M-485)[2211], 4th June 1986;& JP-A-61 010 421 (MATSUSHITA DENKI SANGYO K.K.) 17-01-1986

## Description

### Background of the Invention

This invention relates to a method and an injection molding apparatus for manufacturing a tray or mold utilisable for imprinting moldable foodstuffs. In addition, this invention relates to the tray or mold and an associated method for further imprinting or personalizing individual molded products within a series.

Significant consumer appeal may be imparted to chocolate bars, candy bars and other foodstuffs by imprinting thereon personalized messages which may be unique to the individual customer, to a group of customers or to the particular producer. Candy bars and the like imprinted with trademark logos or advertising slogans may be used effectively for advertising and marketing purposes. For example, a company having different classes of customers may wish to send, for promotional purposes, to the members of each class a chocolate bar bearing an imprinted message unique to the respective class.

Conventional molds for producing chocolate items are produced in one of three ways. Pursuant to a first technique, particularly utilized in the production of bite-size chocolate pieces such as truffles and filled candies, or of mass produced candy bars, each piece or bar is formed in a precision mold intended for a single item only. Tooling is accordingly implemented on a one-design use basis only. If any changes are to be made in the details of the chocolate pieces or bars, new molds must be made.

Pursuant to another conventional technique for manufacturing molds to be utilized in the production of chocolate pieces, exemplarily chocolate bars having design elements but not intended for mass production, the chocolate molds are vacuum formed from a sheet of thin thermoplastic material heated and sucked down over a pre-cut wooden form. Although such a technique is inexpensive, it is incapable of producing a high degree of detail in the inscribed shapes.

A third conventional technique for manufacturing molds to be utilized in the production of chocolate pieces involves molding with silicone, as described in U.S. Patent No. 4,200,658 to Katzman et al. This method of forming chocolate pieces or bars is slow and cumbersome inasmuch as it takes hours or days for a silicone mold to cure. The use of silicone molds is especially ill adapted for applications in which the form of the mold must be frequently and rapidly changed.

U.S. Patent 4,384,702 describes an insert for a mold for impressing indicia on each molded product formed in the mold which need not be removed or replaced for changing the identification of the indicia impressed. The insert includes a plug body having a face shaped to form a working part of a mold when the insert is installed in a mold. At least one bore is formed in the plug body through the face. A plug is situated in the bore and has one end contiguous with the face, the one end substantially filling the bore at the face and having a mold engaging surface contoured to conform to the adjacent contours of the face. A series of indicia is included on the face spaced about the bore and an indicia selection indicator is located on the mold engaging surface of the plug. The plug is rotatable about its axis to direct the indicator toward one of the indicia.

U.S. Patent 3,883,109 describes a unitary mold for use in casing concrete objects, for example, meter box covers and the like. The mold comprises a one-piece tray molded from flexible polyvinylchloride having a bottom wall. The top surface of the bottom of the tray is formed with whatever nonskid or other pattern is desired for the top surface of the cast object, and can include a cavity to receive various pattern inserts for forming lettering, indentations or other formations on the cast object.

We have now found it possible to provide a method and apparatus for producing a mold or tray having an inscription to be imprinted on a moldable food stuff, wherein trays having different inscriptions can be easily produced;

We have also found it possible to provide an injection molding method and apparatus for producing a tray of the above-described type wherein the inscription can be changed without requiring a complete retooling of the injection mold.

We have also found it possible to provide a tray or mold for forming moldable foodstuffs into a shape having an inscription which is easily changeable; and
we have also found it possible to provide such a mold or tray capable of imparting accurate and detailed imprints to moldable foodstuffs.

We have also found it possible to provide a method for mass producing foodstuffs imprinted with personalized messages; and we have further found it possible to provide such a method for mass producing foodstuffs, wherein the personalized foodstuffs are produced efficiently and economically.

### Summary of the Invention

A mold utilizable with an extruder for forming a synthetic resin tray by injection molding comprises, in accordance with the present invention, a female mold portion, a male mold portion, and a plate disposed in the male mold portion. The female mold portion defines a mold cavity, while the male mold portion includes a skirt projecting into the cavity and spaced from inner surfaces of the female mold portion. The skirt is provided at a free end with an inwardly extending lip defining an opening at the free end of the skirt. The plate is disposed at the free end of the skirt and engages the lip thereon. The plate is provided on a side facing the mold cavity with an inscription and is pressed against the lip by a pressure member engaging the plate on a side thereof opposite the mold cavity, whereby a substantially fluid tight seal is formed between the plate and the lip. The pressure member is disposed at least partially in the male mold portion, while access is provided on the male mold portion for facilitating removal and replacement of the inscribed plate.

Pursuant to two preferred features of the present invention, the pressure member has a face in engagement with the plate along a peripheral edge thereof and takes the form of a block substantially co-extensive with the plate. The block is shiftable between a pressure position and a disengaged position.

The access on the male mold portion is preferably provided by a cover on the male mold portion and means for locking the cover to the male mold portion. The cover and the male mold portion advantageously comprise respective halves of a mold member attached to the female mold portion. A clamp such as a bolt element may be provided in the cover for locking or fastening the pressure block to the cover.

Pursuant to yet another preferred feature of the present invention, the inscribed plate is provided on the side thereof facing the mold cavity with means such as a projection for forming an opening in the bottom wall of the tray produced upon injection of hardenable synthetic resin material into the mold cavity. Alternatively, or in addition, the plate may be provided on the side thereof facing the mold cavity with a projection for forming a recess in the bottom wall of the injection molded tray. Such a recess may receive moldable foodstuff of a composition or color different from the composition or color of moldable foodstuff poured in a liquid state in the remainder of the tray.

A method for producing a pair of synthetic resin trays each having a bottom wall provided with a different inscription comprises, in accordance with the present invention, the steps of: (a) providing a mold having a female mold portion defining a mold cavity and a male mold portion including a skirt projecting into the mold cavity, the skirt being spaced from the inner surfaces of the female mold portion and provided at a free end with an inwardly extending lip defining an opening at the free end of the skirt, (b) pressing a first plate disposed in the male mold portion at the free end of the skirt against the lip to form a substantially fluid tight seal between the plate and the lip, the plate being provided on a side facing the mold cavity with a first inscription, and (c) injecting a hardenable synthetic resin material into the mold cavity. Further steps in the method in accordance with the present invention for producing two trays having different inscriptions in their bottom walls include: (d) allowing the injected synthetic resin material to harden to form a first tray having a bottom wall provided with an inversion of the first inscription, (e) opening the mold, (f) ejecting the first tray, (g) releasing pressure on the first plate, (h) removing the first plate from the male mold portion, (i) inserting a second plate into the male mold portion, and (j) pressing the second plate against the lip to form a substantially fluid tight seal between the second plate and the lip. The second plate is provided on a side facing the cavity with a second inscription. Further steps include: (k) closing the mold upon the insertion of the second plate, (l) injecting additional hardenable synthetic resin material into the mold cavity, (m) allowing the injected additional synthetic resin material to harden to form a second tray having a bottom wall provided with an inversion of the second inscription, (n) opening the mold and (o) ejecting the second tray.

A tray in accordance with the instant invention comprises a main inscription on a bottom inside surface and formed therein with an aperture (80'), the aperture being defined by an inclined surface. Foodstuffs with temperature-dependent flow characteristics suitable for use in accordance with the invention include, without limitation, chocolates, caramels, and other candies and foods which become pourable when heated, but which cool to form substantially solid bodies.

Various preferred features and embodiments of the present invention will now be described by way of non-limiting example, with reference to the accompanying drawings, in which:
Fig. 1 shows an isometric view of bottom side of a molding tray made in accordance with one embodiment of the present invention;
Fig. 2 shows an isometric view of the inner side of the molding tray of Fig. 1.
Fig. 3 shows a longitudinal cross-sectional view of the molding tray of Figs. 1 and 2.
Fig. 4 shows a plan view of a bottom inside surface of the tray of Figs. 1-3, showing a sample inscription made in accordance with an embodiment of the present invention.
Fig. 5 shows a perspective view of an injection mold for forming the molding tray of Figs. 1-4.
Fig. 6 shows a vertical cross-sectional view of the mold of Fig. 5 in an assembled condition, showing the molding tray of Figs. 1-3 in cross-section and on a reduced scale.
Fig. 7 shows a detailed view taken from the region VII in Fig. 6.
Fig. 8 shows a longitudinal cross-sectional view of another molding tray in accordance with an embodiment of the present invention.
Fig. 9 shows a partial cross-sectional view of a bottom wall of a modified molding tray in accordance with an embodiment of the present invention, showing a plate insert in an opening in the bottom wall.
Fig. 10 shows a plan view of a plate insert together with holding clips for fastening the insert to a molding tray in accordance with an embodiment of the present invention.
Fig. 11 shows a partial cross-sectional view of an inscription plate with a projection for forming an opening in a bottom wall of a injection molded molding tray in accordance with an embodiment of the invention.
Fig. 12 shows a longitudinal cross-sectional view of yet another molding tray in accordance with an embodiment of the present invention.
Fig. 13 shows a partial cross-sectional view of a bottom wall of another modified molding tray in accordance with an embodiment of the present invention, showing another form of a plate insert in an opening in the bottom wall of a molding tray.
Fig. 14 shows a vertical cross-sectional view largely identical to Fig. 6, showing a feature of the invention for forming ornaments on an edible bar in accordance with an embodiment of the present invention.

In accordance with the present invention, foodstuffs having temperature-dependent flow characteristics are personalized by pouring the foodstuff to be imprinted into a mold, prepared in accordance with the invention, at a time when the temperature of the foodstuff is high enough to allow pourability. Following introduction of the foodstuff into the mold and, optionally, closing the mold, the foodstuff is allowed to cool and harden. Foodstuffs particularly useful for this process, include, without limitation, chocolate, milk chocolate, butterscotch, toffies, and other candies and foods on which it is desirable to imprint personalized messages. As a particular example, chocolate candy bars having personalized messages may be formed in molds which are injection molded and formed pursuant to particular features of the present invention.

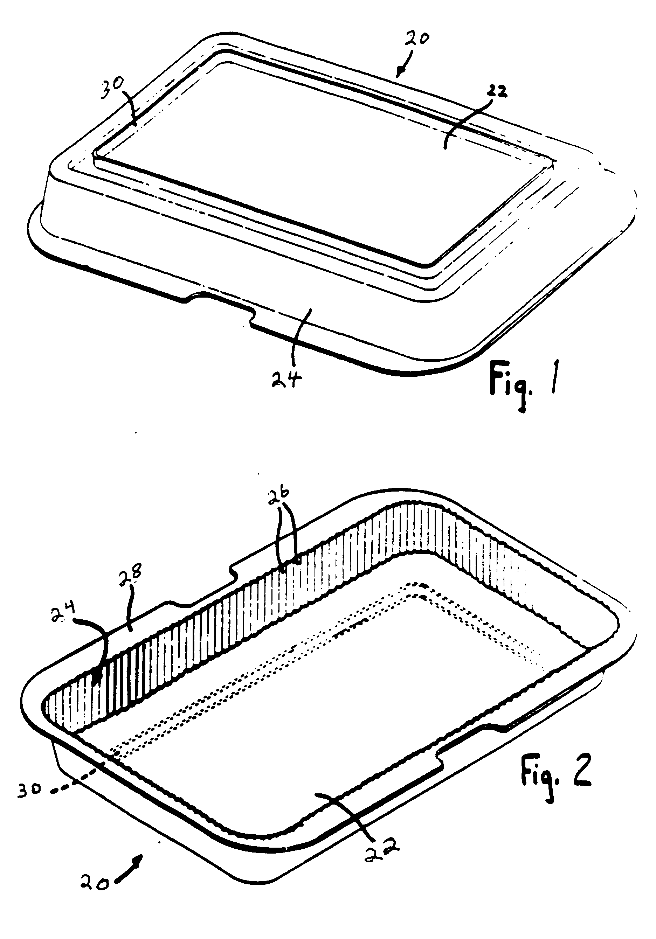

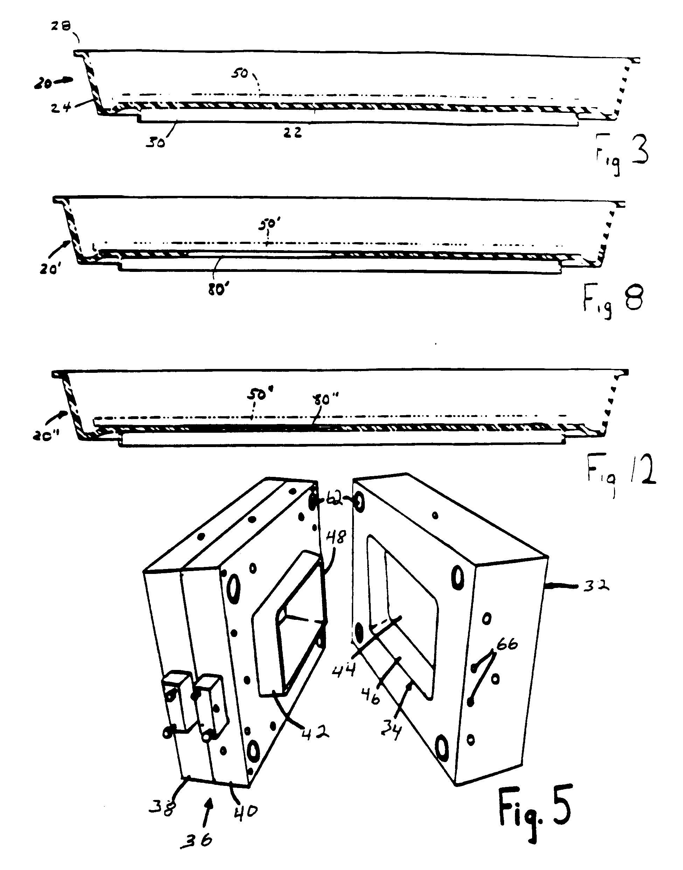

As illustrated in Figs. 1, 2 and 3, a tray 20 for molding a chocolate bar is a unitary piece of injection molded synthetic resin material including a bottom wall 22 and a perimetrically extending side wall 24. As shown in Fig. 2 (but not in the other drawing figures for purposes of clarity), side wall 24 may be provided on an inner side with a plurality of linear ribs 26 contiguous with one another and extending substantially perpendicularly with respect to bottom wall 22. At a free end, side wall 24 is further provided with an outwardly extending lip or rim 28.

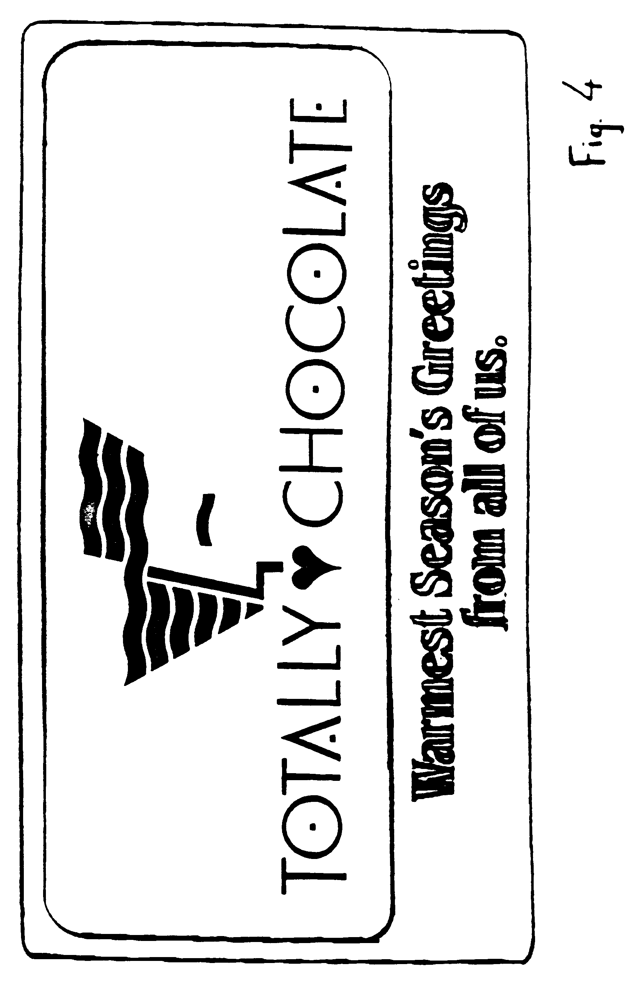

On an outer side, bottom wall 22 is provided with a perimetrically extending bead or ridge 30, while on an inner side or surface the bottom wall is formed with an inscription (not illustrated in Figs. 2 and 3, for purposes of clarity) transferable to a bar of chocolate of other moldable foodstuff in inverted form. Fig. 4 illustrates an example of an inscription which can be provided on a chocolate bar in accordance with the steps and apparatus of the present invention and which is provided in inverted form on the inner surface of bottom wall 22.

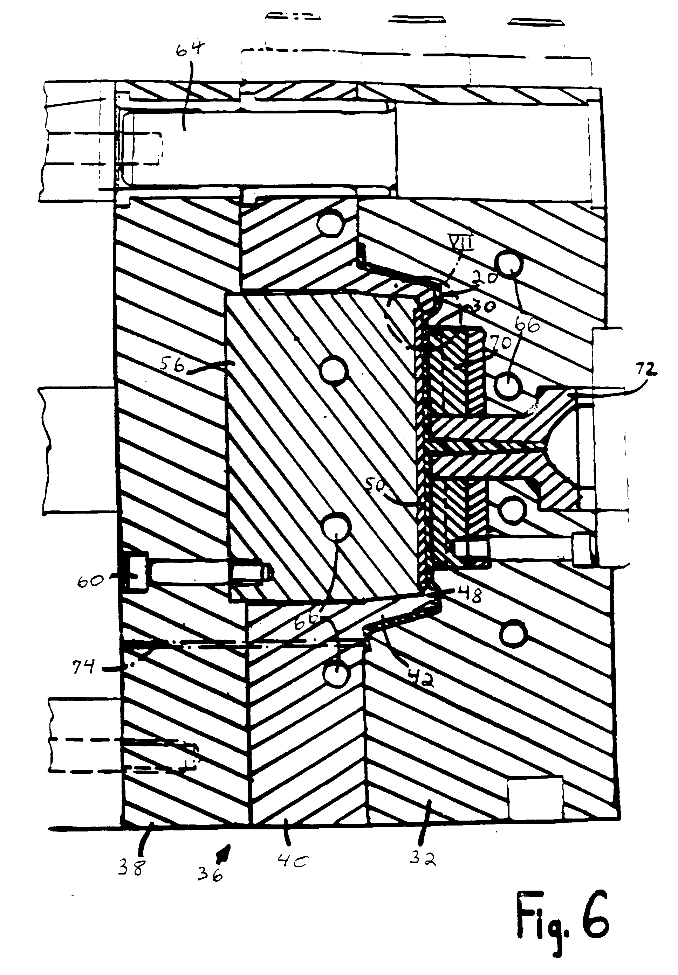

As illustrated in Figs. 5 and 6, a mold utilizable with an extruder for forming synthetic resin tray 20 by injection molding comprises, in accordance with the present invention, a female mold portion 32 defining a mold cavity 34 and a male mold portion 36 including two mold halves 38 and 40.

Male mold portion 36, and particularly mold half 40, carries a skirt 42 which in the assembled state of the mold (Fig. 6), projects into mold cavity 34. Skirt 42 is spaced from inner surfaces 44 and 46 of female mold portion 32. Inner surfaces 44 and 46 define cavity 34. Skirt 42 is provided at a free end with an inwardly extending lip 48 which defines a substantially rectangular opening at the free end of skirt 42.

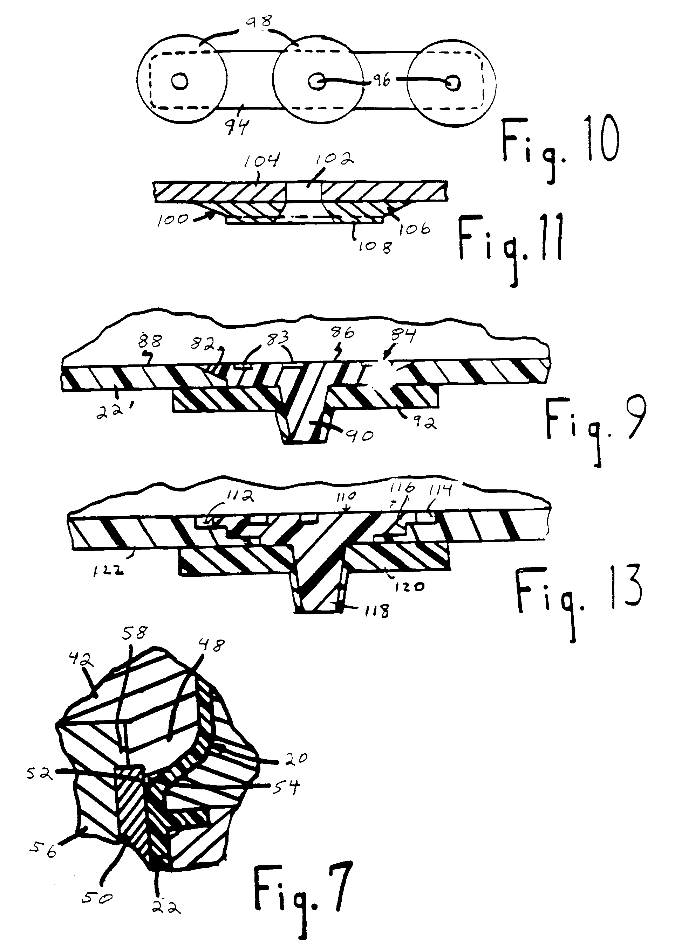

As illustrated in Fig. 6, a preferably magnesium plate 50 bearing an inscription or a personalized message having variation and detail similar to that illustrated in the sample inscription of Fig. 4 is disposed in male mold half 40 at the free end of skirt 42. The inscription on plate 50 faces into mold cavity 34 in the assembled state of the mold shown in Fig. 6. As illustrated in detail in Fig. 7, an edge region 52 of plate 50 engages a shoulder 54 provided on lip 48. Shoulder 54 defines an angular recess on an inner side of lip 48, plate 50 being seated in that recess.

Male mold portion 36 includes a pressure block 56 which engages plate 50 on a side thereof opposite mold cavity 34 for pressing plate 50 against shoulder 54 of lip 48 to form a substantially fluid tight seal between the plate and the lip. As illustrated in Fig. 6, pressure block 56 is mostly located within male mold half 40 and projects partially into male mold half 38. Pressure block 56 is at least coextensive with plate 50 and, in the illustrated embodiment, includes a rim 58 (Fig. 7) defining a rectangular recess receiving plate 50.

Pressure block 56 is clamped to plate 50 and lip 48 upon the locking of male mold halves at 38 and 40 to one another. As illustrated in Fig. 6, mold halve 38 may be provided with one or more bolts 60 for attaching pressure block 56 to mold half 38. Upon a separation of mold halves 38 and 40 pursuant to conventional techniques, pressure block 56 slides out of mold halve 40 to enable a replacement of plate 50 by another plate (not illustrated) having exactly the same dimensions and a different inscription on one face thereof.

Mold portions 32 and 36 are provided with alignable bores 62 (Fig. 5) traversed by support shafts 64 (Fig. 6) in a manner well known in the art. Mold halves 32 and 36 are also provided with conduits 66 through which cooling fluid flows during an injection molding operation.

Female mold portion 32 may be provided with an interchangeable mold part 70 for varying the configuration of bottom wall 22. For example, the size and location of ridge 30 may be altered by replacing mold part or insert 70 with another mold part having a different structure. As is well known in the art, female mold portion 32 is also provided with an injection nozzle part 72 through which liquefied synthetic resin material is injected into mold cavity 34 to form molding tray 20.

Upon the injection of hardenable synthetic resin material into mold cavity 34 and upon the hardening of the injected synthetic resin material to form tray 20, mold portions 32 and 36 are separated from one another to open the mold. An ejector mechanism 74 indicated in Fig. 6 in dot-dash lines is then actuated to eject the tray 20 from skirt 42. Male mold halves 38 and 40 are separated from one another and pressure block 56 is removed from mold half 40, whereupon inscription plate 50 is replaced by another plate having a different inscription. Upon the insertion of block 56 into mold half 40 and skirt 42 and the locking of mold halves 38 and 40 to one another so that pressure block 56 presses against the new plate 50 to clamp that plate against lip 48, the mold is closed and hardenable synthetic resin material is injected into mold cavity 34 to form a tray having an inscription which is the reverse or inverted counter-part of the inscription on the newly inserted plate 50.

Each inscription plate 50 is preferably used to form a relatively limited number of molding trays 20. Upon the completion of such a production run, the inscription plate 50 is interchanged with another plate and another run can be commenced. Generally, the plate changing operation need take no longer then five minutes. Clearly, a number of trays having different inscriptions may be produced at low cost and high efficiency, without the need for completely retooling the injection mold.

As depicted in Fig. 8, a molding tray 20' in accordance with the present invention may be provided with an opening 80' formed during the injection molding process by a projection on the inscribed face of a plate 50', the projection having a thickness equal to the depth or breadth of mold cavity 34 upon the closure of the mold.

As illustrated in Fig. 9, an opening in a bottom wall 22' of a mold tray in accordance with the instant invention preferably has bevelled edges or side surfaces 82 engagable in a form fitting manner with similarly inclined edges or surfaces at the periphery of a plate insert 84. Plate insert 84 or other such inserts may carry an inscription or a personalized message 83 on a side 86 facing into the interior of the tray. The message may, for example, include the name of an individual in a group of individuals to which personalized chocolate bars are to be sent. As described hereinabove, an inside surface 88 of bottom wall 22' is provided with an inscription common to all the chocolate bars sent to members of the group of individuals. Each plate insert 84 is releasably attached or fastened to the bottom wall 22' of the molding tray on an outer side thereof opposite bottom inside surface 88. To releasably fasten a plate insert 84 to bottom wall 22' in the opening provided therein, insert 84 is exemplarily provided on one side with a frusto-conical central post 90. Post 90 is attached in a form-lock or friction fit to a resilient clip 92 which bridges the opening in bottom wall 22' and securely holds plate insert 84 inside the opening. To change the personalized subscription plate 84, resilient clip 92 is detached from plate insert 84, exemplarily by breaking post 90. Another inscription or name plate can then be installed.

As illustrated in Fig. 10, an inscription plate 94 for insertion into an opening or aperture in the bottom wall of a chocolate molding tray in accordance with the present invention may take an elongate form and be provided with a plurality of posts 96 for attachment to respective resilient clips 98.

As depicted in Fig. 11, the opening in bottom wall 22' (Fig. 9) is advantageously formed by a projection 100 attached via a bolt 102 to an inscription plate 104 insertable in male mold portion 36 (Fig. 6) as a substitute for plate 50. Projection 100 includes a frusto-conical portion 106 and a thin cylindrical portion 108. For purposes of enhancing the seal between plate insert 84 (Fig. 9) and bottom wall 22', the angle of inclination of the outer surface of frusto-conical portion 106 with respect to the plane of inscription plate 104 is less than the corresponding angle of inclination of the beveled edge of plate insert 84. The resulting difference in inclination of surface 82 (Fig. 9) and the beveled surface of plate insert 84 serves to center plate insert 84 and to enhance the seal around the edge thereof with a slight deflection of the periphery of insert 84 during installation.

It is to be noted that the use of flat head screws (e.g., 102) to attach a projection (e.g., 106) to an inscription plate in accordance with the present invention enables the deposition of an increased amount of plastic in the areas of the screw heads, which facilitates removal of residual plastic film known as "flash. " Upon the removal of a major portion of the flash associated with an opening in the bottom wall (e.g., 22') of a chocolate molding tray in accordance with the present invention, traces of the flash adhering to the sides of the opening may be removed by a scraping procedure. It is to be further noted that a projection (106) on the inscribed face of an inscription plate (104) may require bonding by epoxy or other adhesive to achieve adequate sealing.

As shown in Fig. 12, a molding tray 20'' pursuant to the instant invention may be provided with a recess 80'' for receiving moldable foodstuff of a different texture or color to provide a decorative contrast with the remainder of a molded chocolate bar or other molded form of edible foodstuff. Recess 80'' is formed by a projection on the inscribed surface of a plate 50'' the projection having a thickness less than the breadth of mold cavity 34. The projection for forming recess 80'' may be attached to plate 50'' by epoxy or other adhesive. Insofar as the surface of molding tray 20'' at recess 80'' must be smooth, attachment elements such as bolts are inappropriate.

As illustrated in Fig. 13, a plate insert 110 pursuant to the instant invention may be provided along a circumference with a stepped configuration for mating with a stepped configuration defining an opening 112 in a bottom wall 122 of a chocolate molding tray. A continuous bezel 114 is formed around plate insert 110 and takes the form of a shoulder. A second step 116 in the stepped configuration of opening 112 preferably terminates at points spaced from the ends of plate insert 110. Step 116 serves to center plate insert 110 in aperture 112 and in an engraving machine. Step 116 does not extend to the ends of slot or aperture 112 so that if there is a tolerance problem the large mold can be deflected outwardly to allow insertion. If step 116 continued to the end, the mold would be too stiff to deflect. Plate insert 110 is provided with a post 118 attachable to a resilient clip 120 in a snap-lock or friction fit.

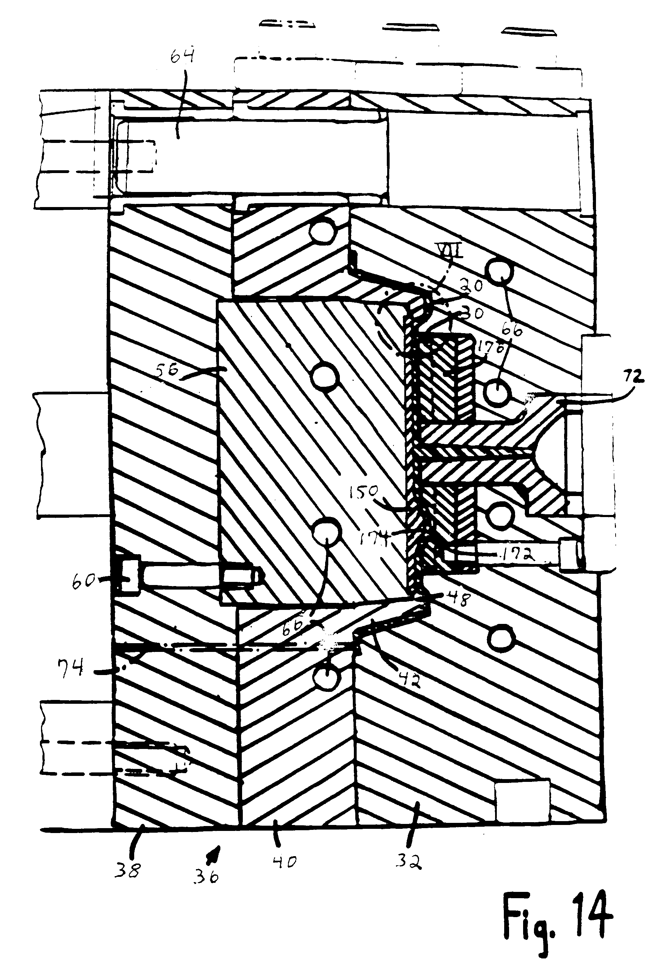

Fig. 14 illustrates a particular feature of the present invention, wherein an aluminum mold part 170 corresponding to mold part 70 in Fig. 6 is provided with a hollowed-out portion 172 into which a projection 174 on an inscription plate 150 protrudes. The feature of the invention illustrated in Fig. 14 enables the molding of a synthetic resin tray 176 having a substantial depression for receiving differently colored chocolate or other liquefied hardenable food material to form an ornament or decoration on the surface of a chocolate bar molded in tray 176. Of course, the exact details of the ornament will be determined by the details of projection 174. It is to be noted that hollowed out portion 172 should not extend beyond the rim of ridge 30.

Although the invention has been described in terms of particular embodiments and applications, one of ordinary skill in the art, in light of this teaching, can generate additional embodiments and modifications without departing from the scope of the claimed invention. Accordingly, it is to be understood that the descriptions and illustrations herein are proferred by way of example to facilitate comprehension of the invention and should not be construed to limit the scope thereof.

## Claims

1. A mold utilizable with an extruder for forming a synthetic resin tray (20) by injection molding, comprising in combination:
a female mold portion (32) defining a mold cavity (34);
a male mold portion (36, 40); and
pressure means;
characterized in that the male mold portion includes a skirt (42) projecting into said cavity, said skirt (42) being spaced from inner surfaces (44, 46) of said female mold portion (32), said skirt (42) being provided at a free end with an inwardly extending lip (48), said lip (48) defining an opening at said free end;
a plate (50) is removably disposed in said male mold portion (36, 40) within said skirt (42), said plate (50) engaging said lip (48), said plate (50) being provided on a side facing said cavity with an inscription means for forming a tray having an inscription;
said pressure means (56) engages said plate (50) on a side thereof opposite said cavity for pressing said plate (50) against said lip (48) to form a substantially fluid tight seal between said plate (50) and said lip (48), said pressure means (56) being disposed at least partially in said male mold portion (36, 40); and
access means (38) is provided on said male mold portion (36, 40) for facilitating removal and replacement of said plate (50).

2. The mold defined in claim 1 characterised in that said pressure means (56) includes a pressure member (56) having a face in engagement with said plate (50) along a peripheral edge thereof.

3. The mold defined in claim 2 characterised in that said pressure member (56) takes the form of a block (56) and wherein said face is coextensive with said plate (50) and engages said plate substantially along the entire extent thereof.

4. The mold defined in claim 3 characterised in that said block (56) is shiftable between a pressure position and a disengaged position.

5. The mold defined in any preceding claim characterised in that said access means includes a cover (38) on said male mold portion (36, 40) and means for locking said cover (38) to said male mold portion (36, 40).

6. The mold defined in claim 5 characterised in that said cover (38) and said male mold portion (40) comprise respective halves of a mold member (36) attached to said female mold portion (32).

7. The mold defined in claim 6, characterised in further comprising clamping means (60) engageable with said block for clamping said block (56) to said plate (50).

8. The mold defined in claim 7 characterised in that said clamping means (60) includes a bolt element.

9. The mold defined in any preceding claim characterised in that said plate (50) is provided on the side thereof facing said cavity with means for forming an opening in a bottom wall (22') of the tray (20) produced by injecting hardenable synthetic resin material into said cavity (34), said means for forming comprising a projection (100) on the side of said plate (50) facing said cavity (34).

10. The mold defined in any one of claims 1 to 8 characterised in that said plate (50) is provided on the side thereof facing said cavity (34) with means for forming a recess (80'') in a bottom wall (22) of the tray (20) produced by injecting hardenable synthetic resin material into said cavity (34), said means for forming comprising a projection (100) on the side of said plate (50) facing said cavity.

11. The mold defined in claim 1 characterised in that said pressure means (56) includes a pressure block (56), further comprising clamping means (60) engageable with said block (56) for clamping said block (56) to said plate (50).

12. A method for producing a pair of synthetic resin trays (20) each having a bottom wall (22) provided with a different inscription, comprising the steps of:
providing a mold having a female mold portion (32) defining a mold cavity (34) and a male mold portion (36, 40) including a skirt (42) projecting into said cavity (34), said skirt (42) being spaced from inner surfaces of said female mold portion (32), said skirt (42) being provided at a free end with an inwardly extending lip (48), said lip (48) defining an opening to said free end;
pressing a first plate (50) disposed on said male mold portion (36) at said free end of said skirt (42) against said lip (48) to form a substantially fluid tight seal between said plate (50) and said lip (48), said plate (50) being provided on a side facing said cavity (34) with a first inscription;
injecting hardenable synthetic resin material into said cavity (34):
allowing the injected synthetic resin material to harden to form a first tray (20) having a bottom wall (22) provided with an inversion of said first inscription;
opening said mold;
ejecting said first tray (20);
releasing pressure on said first plate (50);
removing said first plate (50) from said male mold portion (36);
inserting a second plate (50) into said male mold portion (36);
pressing said second plate (50) against said lip (48) to form a substantially fluid tight seal between said second plate (50) and said lip (48), said second plate (50) being provided on a side facing said cavity (34) with a second inscription;
closing said mold;
injecting additional hardenable synthetic resin material into said cavity (34);
allowing the injected additional synthetic resin material to harden to form a second tray (20) having a bottom wall (22) provided with an inversion of said second inscription;
opening said mold; and
ejecting said second tray (20).

13. The method defined in claim 15 wherein said steps of pressing including the steps of pressing a pressure block (56) against said first plate (50) and said second plate (50), respectively.

14. The method defined in claim 16 wherein said step of releasing includes the step of shifting said block (56) away from said first plate (50).

15. The method defined in claim 15 wherein at least one of said first tray (20) and said second tray (20) is formed in a bottom inside surface with an aperture (80'), further comprising the steps of providing an additional plate (84) having on one side an additional inscription and dimensions substantially equal to dimensions of said aperture (80'), disposing said additional plate (84) in said aperture (80') and fastening said additional plate (84) to said one of said first tray (20) and said second tray (20) on an outer side thereof opposite said bottom inside surface (88).

16. A molding tray (20) comprising a main inscription on a bottom inside surface (88), characterised in that said bottom inside surface is formed therein with an aperture (80'), the aperture being defined by an inclined surface (106).

## Patentansprüche

1. Eine bei einer Strangpresse verwendbare Form zum Bilden einer Kunstharzschale (20) durch Spritzgießen, die in Kombination aufweist:
ein Aufnahmeformteil (32), das einen Formhohlraum (34) begrenzt;
ein Einführformteil (36, 40); und
Druckmittel;
**dadurch gekennzeichnet,** daß das Einführformteil einen Rand (42) aufweist, der in den Hohlraum hineinragt, wobei der Rand (42) von den inneren Oberflächen (44, 46) des Aufnahmeformteils (32) in Abstand gehalten ist, wobei der Rand (42) an einem freien Ende mit einer sich nach innen erstreckenden Lippe (48) versehen ist, wobei die Lippe (48) an dem freien Ende eine Öffnung bildet;
eine Platte (50) abnehmbar in dem Einführformteil (36, 40) innerhalb des Randes (42) angeordnet ist und mit der Lippe (48) in Eingriff kommt und auf einer Seite, die dem Hohlraum zugewandt ist, mit einem Beschriftungsmittel versehen ist, um eine Schale zu bilden, die eine Beschriftung hat;
das Druckmittel (56) mit der Platte (50) auf seiner einen Seite in Eingriff kommt, welche dem Hohlraum gegenüberliegt, um die Platte (50) gegen die Lippe (48) zu pressen, um eine im wesentlichen fluiddichte Abdichtung zwischen der Platte (50) und der Lippe (48) zu bilden, wobei das Druckmittel (56) wenigstens teilweise in dem Einführformteil (36, 40) angebracht ist; und
Zugangsmittel (38) auf dem Einführformteil (36, 40) vorgesehen sind, um das Entfernen und den Austausch der Platte (50) zu erleichtern.

2. Form nach Anspruch 1, **dadurch gekennzeichnet**, daß das Druckmittel (56) ein Druckteil (56) aufweist, von dem eine Fläche mit der Platte (50) entlang ihrer Umfangskante in Eingriff steht.

3. Form nach Anspruch 2, **dadurch gekennzeichnet**, daß das Druckteil (56) die Form eines Blockes (56) hat, wobei die Fläche mit der Platte (50) ausdehnungsgleich ist und mit der Platte im wesentlichen entlang ihrer gesamten Ausdehnung in Eingriff steht.

4. Form nach Anspruch 3, **dadurch gekennzeichnet**, daß der Block (56) zwischen einer Druckposition und einer Außereingriffsposition verschiebbar ist.

5. Form nach einem der vorhergehenden Ansprüche, **dadurch gekennzeichnet,** daß das Zugangsmittel eine Abdeckung (38) auf dem Einführformteil (36, 40) und Mittel zum Verriegeln der Abdeckung (38) mit dem Einführformteil (36, 40) aufweist.

6. Form nach Anspruch 5, **dadurch gekennzeichnet,** daß die Abdeckung (38) und das Einführformteil (40) jeweils Hälften eines Formteils (36) aufweist, die an dem Aufnahmeformteil (32) befestigt sind.

7. Form nach Anspruch 6, **dadurch gekennzeichnet,** daß sie ferner Klemmittel (60) aufweist, die mit dem Block zum Anklemmen des Blockes (56) an der Platte (50) in Eingriff bringbar sind.

8. Form nach Anspruch 7, **dadurch gekennzeichnet,** daß das Klemmittel (60) ein Bolzenelement aufweist.

9. Form nach einem der vorhergehenden Ansprüche, **dadurch gekennzeichnet,** daß die Platte (50) auf einer ihrer dem Hohlraum zugewandten Seite mit Mitteln zum Bilden einer Öffnung in der Bodenwand (22') der Schale (20) versehen ist, die durch Einspritzen von härtbarem Kunstharzmaterial in den Hohlraum (34) hergestellt ist, wobei die Mittel zum Bilden einen Vorsprung (100) auf der Seite der Platte (50) aufweisen, welche dem Hohlraum (34) zugewandt ist.

10. Form nach einem der Ansprüche 1 bis 8, **dadurch gekennzeichnet,** daß die Platte (50) auf ihrer dem Hohlraum (34) zugewandten Seite mit Mitteln zur Bildung einer Ausnehmung (80'')in einer Bodenwand (22) der Schale (20) versehen ist, die durch Einspritzen von härtbarem Kunstharzmaterial in den Hohlraum (34) hergestellt wurde, wobei die Mittel zum Bilden einen Vorsprung (100) auf der Seite der Platte (50) aufweisen, die dem Hohlraum zugewandt ist.

11. Form nach Anspruch 1, **dadurch gekennzeichnet,** daß das Druckmittel (56) einen Druckblock (56) aufweist, ferner mit Klemmitteln (60), die mit dem Block (56) zum Anklemmen des Blockes (56) an der Platte (50) in Eingriff bringbar sind.

12. Verfahren zum Herstellen eines Paares von Kunstharzschalen (20), wobei jede eine Bodenwand (22) hat, die mit einer unterschiedlichen Beschriftung versehen ist, mit den Schritten:
Schaffen einer Form, die ein Aufnahmeformteil (32) hat, das einen Formhohlraum (34) begrenzt, und die ein Einführformteil (36, 40) mit einem Rand (42) hat, der in den Hohlraum (34) hineinragt, wobei der Rand (42) von den inneren Oberflächen des Aufnahmeformteils (32) in Abstand angeordnet ist und an einem freien Ende mit einer sich nach innen erstreckenden Lippe (48) versehen ist, die zu dem freien Ende hin eine Öffnung begrenzt;
Pressen einer ersten Platte (50), die auf dem Einführformteil (36) an dem freien Ende des Randes (42) gegen die Lippe (48) angeordnet ist, um eine im wesentlichen fluiddichte Abdichtung zwischen der Platte (50) und der Lippe (48) zu bilden, wobei die Platte (50) auf einer dem Hohlraum (34) zugewandten Seite mit einer ersten Beschriftung versehen ist;
Einspritzen von härtbarem Kunstharzmaterial in den Hohlraum (34):
Erlauben, daß das eingespritzte Kunstharzmaterial härtet, um eine erste Schale (20) zu bilden, die eine Bodenwand (22) hat, die mit einer Umkehrung der ersten Beschriftung versehen ist;
Öffnen der Form;
Ausstoßen der ersten Schale (20);
Drucklösen auf der ersten Platte (50);
Entfernen der ersten Platte (50) von dem Einführformteil (36);
Einsetzen einer zweiten Platte (50) in das Einführformteil (36);
Drücken der zweiten Platte (50) gegen die Lippe (48), um eine im wesentlichen fluiddichte Abdichtung zwischen der zweiten Platte (50) und der Lippe (48) zu bilden, wobei die zweite Platte (50) auf einer dem Hohlraum (34) zugewandten Seite mit einer zweiten Beschriftung versehen ist;
Schließen der Form;
Einspritzen von zusätzlichem, härtbarem Kunstharzmaterial in den Hohlraum (34);
Erlauben, daß das zusätzlich eingespritzte Kunstharzmaterial härtet, um eine zweite Schale (20) zu formen, die eine Bodenwand (22) hat, welche mit einer Umkehrung der zweiten Beschriftung versehen ist;
Öffnen der Form; und
Ausstoßen der zweiten Schale (20).

13. Verfahren nach Anspruch 12, wobei die Schritte des Drückens die Schritte beinhalten, einen Druckblock (56) gegen die erste Platte (50) bzw. die zweite Platte (50) zu drücken.

14. Verfahren nach Anspruch 12, wobei der Schritt des Lösens den Schritt beinhaltet, den Block (56) von der ersten Platte (50) wegzuschieben.

15. Verfahren nach Anspruch 12, wobei wenigstens eine der ersten Schale (20) und der zweiten Schale (20) in einer Bodeninnenoberfläche mit einer Öffnung (80') geformt ist, mit den weiteren Schritten, daß eine zusätzliche Platte (84) vorgesehen wird, die auf einer Seite eine zusätzliche Beschriftung und Abmessungen hat, die im wesentlichen gleich den Abmessungen der Öffnung (80') sind, wobei man die zusätzliche Platte (84) in der Öffnung (80') anordnet und die zusätzliche Platte (84) an der ersten Schale (20) oder der zweiten Schale (20) auf einer ihrer äußeren Seite anbringt, die der Bodeninnenoberfläche (88) gegenüberliegt.

16. Formschale (20) mit einer Hauptbeschriftung auf einer Bodeninnenoberfläche (88), **dadurch gekennzeichnet,** daß die Bodeninnenoberfläche dort mit einer Öffnung (80') geformt ist, wobei die Öffnung durch eine geneigte Oberfläche (106) begrenzt wird.

## Revendications

1. Moule utilisable avec une extrudeuse pour former un plateau en résine synthétique (20) par moulage par injection, comprenant conjointement :
une portion de moule femelle (32) définissant une cavité de moule (34);
une portion de moule mâle (36, 40); et
un moyen de pression;
caractérisé en ce que la portion de moule mâle comprend une collerette (42) se projetant dans ladite cavité, ladite collerette (42) étant espacée des surfaces internes (44, 46) de ladite portion de moule femelle (32), ladite collerette (42) étant dotée à une extrémité libre d'un bec s'étendant vers l'intérieur (48), ledit bec (48) définissant une ouverture à ladite extrémité libre;
une plaque (50) est disposée de manière à être amovible dans ladite portion de moule mâle (36, 40) au sein de ladite collerette (42), ladite plaque (50) engageant ledit bec (48), ladite plaque (50) étant dotée sur une face donnant sur ladite cavité d'un moyen d'inscription pour former un plateau comportant une inscription;
ledit moyen de pression (56) engage ladite plaque (50) sur sa face à l'opposé de ladite cavité pour presser ladite plaque (50) contre ledit bec (48) afin de former un joint sensiblement étanche aux fluides entre ladite plaque (50) et ledit bec (48), ledit moyen de pression (56) étant disposé au moins partiellement dans ladite portion de moule mâle (36, 40); et
un moyen d'accès (38) est disposé sur ladite portion de moule mâle (36, 40) pour faciliter l'enlèvement et le remplacement de ladite plaque (50).

2. Moule selon la revendication 1, caractérisé en ce que ledit moyen de pression (56) comprend un élément de pression (56) comportant une face en engagement avec ladite plaque (50) le long d'un bord périphérique de celle-ci.

3. Moule selon la revendication 2, caractérisé en ce que ledit élément de pression (56) a la forme d'un bloc (56) et dans lequel ladite face est dans la même extension que ladite plaque (50) et engage ladite plaque sensiblement le long de toute son étendue.

4. Moule selon la revendication 3, caractérisé en ce que ledit bloc (56) peut être déplacé entre une position de pression et une position dégagée.

5. Moule selon l'une quelconque des revendications précédentes, caractérisé en ce que ledit moyen d'accès comprend un couvercle (38) sur ladite portion de moule mâle (36, 40) et un moyen pour verrouiller ledit couvercle (38) à ladite porton de moule mâle (36, 40).

6. Moule selon la revendication 5, caractérisé en ce que ledit couvercle (38) et ladite portion de moule mâle (40) consistent en moitiés respectives d'un élément de moule (36) fixé à ladite portion de moule femelle (32).

7. Moule selon la revendication 6, caractérisé en ce qu'il comprend en outre un moyen de serrage (60) pouvant être engagé avec ledit bloc pour serrer ledit bloc (56) sur ladite plaque (50).

8. Moule selon la revendication 7, caractérisé en ce que ledit moyen de serrage (60) comprend un boulon.

9. Moule selon l'une quelconque des revendications précédentes, caractérisé en ce que ladite plaque (50) est dotée sur sa face donnant sur ladite cavité d'un moyen pour former une ouverture dans une paroi inférieure (22') du plateau (20) produit par injection d'une résine synthétique durcissable dans ladite cavité (34), ledit moyen de formation d'ouverture comprenant une projection (100) sur la face de ladite plaque (50) donnant sur ladite cavité (34).

10. Moule selon l'une quelconque des revendications 1 à 8, caractérisé en ce que ladite plaque (50) est dotée sur sa face donnant sur ladite cavité (34) d'un moyen pour former un évidement (80'') dans une paroi inférieure (22) du plateau (20) produit par injection d'une résine synthétique durcissable dans ladite cavité (34), ledit moyen de formation d'évidement comprenant une projection (100) sur la face de ladite plaque (50) donnant sur ladite cavité (34).

11. Moule selon la revendication 1, caractérisé en ce que ledit moyen de pression (56) comprend un bloc de pression (56), comprenant en outre un moyen de serrage (60) pouvant être engage avec ledit bloc (56) pour serrer ledit bloc (56) sur ladite plaque (50).

12. Procédé de fabrication d'une paire de plateaux en résine synthétique (20) comportant chacun une paroi inférieure (22) dotée d'une inscription différente, comprenant les phases consistant à :
former un moule comportant une portion de moule femelle (32) définissant une cavité de moule (34) et une portion de moule mâle (36, 40) comprenant une collerette (42) se projetant dans ladite cavité, ladite collerette (42) étant espacée des surfaces internes de ladite portion de moule femelle (32), ladite collerette (42) étant dotée à une extrémité libre d'un bec s'étendant vers l'intérieur (48), ledit bec (48) définissant une ouverture à ladite extrémité libre;
presser une première plaque (50) disposée sur ladite portion de moule mâle (36) à ladite extrémité libre de ladite collerette (42) contre ledit bec (48) afin de former un joint sensiblement étanche aux fluides entre ladite plaque (50) et ledit bec (48), la-dite plaque (50) étant dotée sur une face donnant sur ladite cavité (34) d'une première inscription;
injecter une résine synthétique durcissable dans ladite cavité (34);
laisser durcir la résine synthétique injectée pour former un premier plateau (20) comportant une paroi inférieure (22) dotée de ladite première inscription sous forme inversée;
ouvrir ledit moule;
éjecter ledit premier plateau (20);
relâcher la pression sur ladite première plaque (50);
extraire ladite première plaque (50) de ladite portion de moule mâle (36);
insérer une seconde plaque (50) dans ladite portion de moule mâle (36);
presser ladite seconde plaque (50) contre ledit bec (48) afin de former un joint sensiblement étanche aux fluides entre ladite seconde plaque (50) et ledit bec (48), ladite seconde plaque (50) étant dotée sur une face donnant sur ladite cavité (34) d'une seconde inscription;
fermer ledit moule;
injecter une résine synthétique durcissable supplémentaire dans ladite cavité (34);
laisser durcir la résine synthétique supplémentaire injectée pour former un second plateau (20) comportant une paroi inférieure (22) dotée de ladite seconde inscription sous forme inversée;
ouvrir ledit moule; et
éjecter ledit second plateau (20);

13. Procédé selon la revendication 12, dans lequel lesdites phases de pression comprennent les opérations consistant à presser un bloc de pression (56) contre ladite première plaque (50) et ladite seconde plaque (50), respectivement.

14. Procédé selon la revendication 12, dans lequel ladite phase de relâchement de pression comprend l'opération consistant à déplacer ledit bloc (56) loin de ladite première plaque (50).

15. Procédé selon la revendication 12, dans lequel au moins l'un desdits plateaux parmi ledit premier plateau (20) et ledit second plateau (20) est doté dans une surface interne inférieure (88) d'une ouverture (80'), comprenant en outre les phases consistant à utiliser une plaque supplémentaire (84) comportant sur une face une inscription supplémentaire et de dimensions sensiblement identiques aux dimensions de ladite ouverture (80'), disposer ladite plaque supplémentaire (84) dans ladite ouverture (80'), et fixer ladite plaque supplémentaire (84) sur l'un desdits plateaux parmi ledit premier plateau (20) et ledit second plateau (20) sur une face externe du plateau à l'opposé de ladite surface interne inférieure (88).

16. Plateau de moulage (20) comprenant une inscription principale sur une surface interne inférieure (88), caractérisé en ce que ladite surface interne inférieure est dotée d'une ouverture (80'), l'ouverture étant définie par une surface inclinée (106).
